# EUROPEAN PATENT APPLICATION

(11) **EP 4 495 289 A1**
(43) Date of publication of application: **22.01.2025**
(21) Application number: 23770921.7
(22) Date of filing: 17.03.2023
(51) Int. Cl.: C23F 11/14, C04B 28/02, C04B 41/62, B01D 53/62, E04G 23/02

(54) **CARBON DIOXIDE IMMOBILIZATION METHOD AND CURED CEMENT BODY FOR CARBON DIOXIDE IMMOBILIZATION**

(30) Priority: 17.03.2022 JP 2022042454
(71) Applicant: Shimizu Corporation, Chuo-ku Tokyo 104-8370 (JP); National University Corporation Hokkaido University, Hokkaido 060-0808 (JP)
(72) Inventor: SAITO, Ryosuke, Tokyo 104-8370 (JP); TSUJINO, Masato, Tokyo 104-8370 (JP); YODA, Yuya, Tokyo 104-8370 (JP); YANO, Keiichi, Tokyo 104-8370 (JP); NISHIDA, Akira, Tokyo 104-8370 (JP); KITAGAKI, Ryoma, Sapporo-shi, Hokkaido 060-0808 (JP); ELAKNES, Yogarajah, Sapporo-shi, Hokkaido 060-0808 (JP); SENBOKU, Hisanori, Sapporo-shi, Hokkaido 060-0808 (JP); SAKAIRI, Masatoshi, Sapporo-shi, Hokkaido 060-0808 (JP)
(74) Representative: Eisenführ Speiser
(86) International application number: PCT/JP2023/010667
(87) International publication number: WO 2023/176969

(57) **Abstract**

A carbon dioxide immobilization method includes: impregnating a cured cement body (10) with a carbon dioxide absorbing liquid containing a carbon dioxide absorbent (20) to obtain a cured cement body (1) for carbon dioxide immobilization, in which the carbon dioxide absorbent (20) is supported within the cured cement body (10); and bringing the cured cement body (1) for carbon dioxide immobilization into contact with air to immobilize carbon dioxide contained in the air in the cured cement body (1) for carbon dioxide immobilization.

## Description

### Technical Field

The present invention relates to a carbon dioxide immobilization method and a cured cement body for carbon dioxide immobilization.

Priority is claimed on Japanese Patent Application No. 2022-042454, filed March 17, 2022, the content of which is incorporated herein by reference.

### Background Art

In order to prevent global warming, there is a worldwide demand for a reduction in carbon dioxide (hereafter, also referred to as CO₂) emissions. In the field of construction materials, methods for reducing an amount of CO₂ generated during concrete production by decreasing an amount of cement used, as well as technologies related to concrete capable of fixing (absorbing) CO₂, have been proposed (for example, see Patent Documents 1 to 3).

### Citation List

### Patent Documents

Patent Document 1 : Japanese Patent No. 4822373
Patent Document 2 : Japanese Unexamined Patent Application, First Publication No. 2015-54806
Patent Document 3 : Japanese Unexamined Patent Application, First Publication No. 2016-84258

### Summary of Invention

### Technical Problem

The related art described above is a technology intended for application in new construction projects.

On the other hand, an amount of existing cured cement bodies such as concrete structures is enormous compared to the number of newly constructed structures. Therefore, it can be expected that a technology of immobilizing CO₂ in the existing cured cement body can greatly contribute to the reduction of CO₂ emissions.

Therefore, an object of the present invention is to provide a carbon dioxide immobilization method capable of enabling immobilization of carbon dioxide even in an existing cured cement body and a cured cement body for carbon dioxide immobilization. Solution to Problem

In order to solve the above problems, the present invention has the following aspects.
[1] A carbon dioxide immobilization method including: impregnating a cured cement body with a carbon dioxide absorbing liquid containing a carbon dioxide absorbent to obtain a cured cement body for carbon dioxide immobilization, in which the carbon dioxide absorbent is supported within the cured cement body; and bringing the cured cement body for carbon dioxide immobilization into contact with air to immobilize carbon dioxide contained in the air in the cured cement body for carbon dioxide immobilization.
[2] The carbon dioxide immobilization method according to [1], in which the carbon dioxide contained in the air is immobilized in the cured cement body for carbon dioxide immobilization as calcium carbonate.
[3] The carbon dioxide immobilization method according to [1] or [2], in which the carbon dioxide absorbent is an alkaline compound.
[4] The carbon dioxide immobilization method according to any one of [1] to [3], in which a pH of the carbon dioxide absorbing liquid at 20°C is 10.0 or higher.
[5] The carbon dioxide immobilization method according to any one of [1] to [4], in which the carbon dioxide absorbing liquid does not contain an organosilicon compound.
[6] The carbon dioxide immobilization method according to any one of [1] to [5], in which the cured cement body is concrete.
[7] The carbon dioxide immobilization method according to any one of [1] to [6], in which the cured cement body contains recycled aggregate.
[8] The carbon dioxide immobilization method according to any one of [1] to [7], in which the carbon dioxide absorbent is an amine-based compound.
[9] The carbon dioxide immobilization method according to any one of [1] to [8], in which the carbon dioxide absorbent is either a secondary amine, a tertiary amine, or both.
[10] The carbon dioxide immobilization method according to any one of [1] to [9], in which the carbon dioxide absorbent is either N-methylethanolamine, N-methyldiethanolamine, or both.
[11] The carbon dioxide immobilization method according to any one of [1] to [10], in which an amount of the carbon dioxide absorbent in the carbon dioxide absorbing liquid is 0.01% to 75 mass% with respect to a total mass of the carbon dioxide absorbing liquid.
[12] The carbon dioxide immobilization method according to any one of [1] to [11], in which a viscosity of the carbon dioxide absorbing liquid at 25°C is 0.1 to 50 mPa·s.
[13] The carbon dioxide immobilization method according to any one of [1] to [12], in which, in a case where the carbon dioxide absorbing liquid is applied to a surface of the cured cement body, an application amount of the carbon dioxide absorbing liquid is 100 to 400 g/m².
[14] The carbon dioxide immobilization method according to any one of [1] to [13], in which, in a case where the carbon dioxide absorbing liquid is sprayed onto a surface of the cured cement body, a spraying amount of the carbon dioxide absorbing liquid is 100 to 400 g/m².
[15] The carbon dioxide immobilization method according to any one of [1] to [14], in which a temperature when the cured cement body for carbon dioxide immobilization is brought into contact with the air is 0°C to 50°C.
[16] A cured cement body for carbon dioxide immobilization, in which a carbon dioxide absorbent is supported within a cured cement body.
[17] The cured cement body for carbon dioxide immobilization according to [16], in which the carbon dioxide absorbent is an alkaline compound.
[18] The cured cement body for carbon dioxide immobilization according to [16] or [17], in which an amount of the carbon dioxide absorbent is 5 to 20 parts by mass with respect to 100 parts by mass of the cured cement body.
[19] The cured cement body for carbon dioxide immobilization according to any one of [16] to [18], in which the cured cement body does not contain an organic silicon compound.
[20] The cured cement body for carbon dioxide immobilization according to any one of [16] to [19], in which the cured cement body is concrete.
[21] The cured cement body for carbon dioxide immobilization according to any one of [16] to [20], wherein the cured cement body contains recycled aggregate.
[22] The cured cement body for carbon dioxide immobilization according to any one of [16] to [21], in which the carbon dioxide absorbent is an amine-based compound.
[23] The cured cement body for carbon dioxide immobilization according to any one of [16] to [22], in which the carbon dioxide absorbent is either a secondary amine, a tertiary amine, or both.
[24] The cured cement body for carbon dioxide immobilization according to any one of [16] to [23], in which the carbon dioxide absorbent is either N-methylethanolamine, N-methyldiethanolamine, or both.

### Advantageous Effects of Invention

According to the carbon dioxide immobilization method and the cured cement body for carbon dioxide immobilization of the present invention, carbon dioxide can be immobilized even in an existing cured cement body.

### Brief Description of Drawings

[FIG. 1] It is a cross-sectional view schematically showing a cured cement body for carbon dioxide immobilization according to an embodiment of the present invention.
[FIG. 2] It is a schematic diagram showing a flow of a carbon dioxide immobilization method according to the embodiment of the present invention.
[FIG. 3] It is a graph showing results of pyrolysis GC/MS of the cured cement body for carbon dioxide immobilization according to the embodiment of the present invention.
[FIG. 4] It is a graph showing ratios of amounts of carbon dioxide immobilized in the cured cement body for carbon dioxide immobilization according to the embodiment of the present invention.
[FIG. 5] It is a graph showing results of TG/DTA of the cured cement body for carbon dioxide immobilization according to the embodiment of the present invention.
[FIG. 6] It is a graph showing a comparison of amounts of calcium carbonate generated in the cured cement body for carbon dioxide immobilization according to the embodiment of the present invention.
[FIG. 7] It is a graph showing a relationship between a concentration and a pH of a carbon dioxide absorbing liquid according to the embodiment of the present invention.
[FIG. 8] It is a plan view schematically showing a structure of a measurement jig used in a model test.
[FIG. 9] It is a cross-sectional view taken along line A-A of FIG. 8.
[FIG. 10] It is a graph showing impedance spectra of steel in the model test.
[FIG. 11] It is a graph showing polarization resistances of the steel in the model test.

### Description of Embodiments

### <<Cured Cement Body for Carbon Dioxide Immobilization>>

A cured cement body for carbon dioxide immobilization of the present invention is a carbon dioxide absorbent support in which a carbon dioxide absorbent is supported within a cured cement body.

In the present specification, "supported" means that the carbon dioxide absorbent adheres to either or both an inside and a surface of the cured cement body.

In the present specification, the cured cement body functions as a so-called support.

Hereinafter, a cured cement body for carbon dioxide immobilization according to an embodiment of the present invention will be described with reference to the drawings.

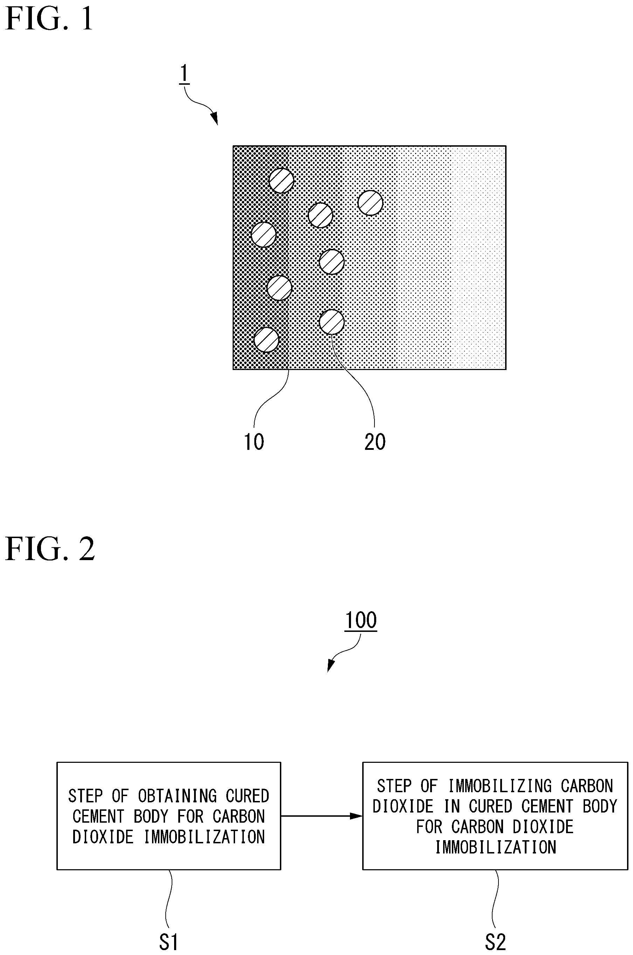

As shown in FIG. 1, a cured cement body 1 for carbon dioxide immobilization according to the present embodiment is a carbon dioxide absorbent support in which a carbon dioxide absorbent 20 is supported within a cured cement body 10. The carbon dioxide absorbent 20 may adhere to voids inside the cured cement body 10 or may adhere to a surface of the cured cement body 10.

A gradation in FIG. 1 represents the degree of impregnation of the cured cement body 10 with the carbon dioxide absorbing liquid. That is, a dark-colored portion of the cured cement body 10 in FIG. 1 indicates a large impregnation amount of the carbon dioxide absorbing liquid, while a light-colored portion of the cured cement body 10 in FIG. 1 indicates a small impregnation amount of the carbon dioxide absorbing liquid.

### <Cured Cement Body>

The cured cement body 10 is a cured product of a cement-containing composition containing cement and water.

In the present specification, "cured product" refers to a product that has been cured to the extent that no deformation occurs even under a pressure with a finger.

Examples of the cement-containing composition include concrete (fresh concrete), mortar (paste mortar), and cement milk (cement paste).

In the present specification, concrete refers to a mixture of cement, fine aggregate (sand), and coarse aggregate (gravel (crushed stone)) kneaded with water.

In the present specification, mortar refers to a mixture of cement and fine aggregate (sand) kneaded with water.

In the present specification, "cement milk" refers to a mixture of cement kneaded with only water.

In the present specification, "cement" refers to a powder that is primarily made from limestone, clay, silica stone, iron oxide raw materials, and the like, and hardens through a chemical reaction with water.

In the present specification, "fine aggregate" refers to sand with a diameter of 5 mm or less.

In the present specification, "coarse aggregate" refers to gravel (crushed stone) with a diameter of more than 5 mm, and the diameter of the coarse aggregate is preferably 25 mm or less.

A water content (moisture content) in the cured cement body 10 is not particularly limited and can be adjusted, for example, by a ratio of water to cement (water-cement ratio (W/C)) in the cement-containing composition, the number of days required for curing (curing period), and the like.

A mixing ratio of cement, fine aggregate, and coarse aggregate in concrete can be appropriately determined according to the required strength for the concrete. The mixing ratio of cement, fine aggregate, and coarse aggregate is preferably, for example, in a mass ratio of 2 to 3 parts of fine aggregate and 4 to 6 parts of coarse aggregate to 1 part of cement.

A mixing ratio of cement and fine aggregate in the mortar can be appropriately determined according to the required strength for the mortar. The mixing ratio of cement and fine aggregate is preferably, for example, in a mass ratio of 2 to 4 parts of fine aggregate to 1 part of cement.

The cured cement body 10 is not particularly limited, but concrete is preferable, and reinforced concrete is more preferable because concrete and reinforced concrete occupy a high proportion of existing structures.

In addition, a size and a shape of the cured cement body 10 are not particularly limited, and an existing structure can be applied as the cured cement body 10.

In addition, the cured cement body 10 may be a cured cement body containing recycled aggregate (aggregate with cured cement adhered thereto). The application of the cured cement body containing recycled aggregate contributes to a further reduction in an environmental load.

### <Carbon Dioxide Absorbent>

The carbon dioxide absorbent 20 is supported within the cured cement body 10 and absorbs carbon dioxide from the air. Therefore, carbon dioxide in the air is taken in the cured cement body 1 for carbon dioxide immobilization, reducing a concentration of carbon dioxide in the air. In addition, the carbon dioxide absorbent 20 takes in carbon dioxide from the air to produce carbonate ions. Therefore, the carbonate ions react with calcium ions in the cured cement body 10 to produce calcium carbonate. In this way, carbon dioxide in the air is immobilized as calcium carbonate in the cured cement body 10 by an action of the carbon dioxide absorbent 20. That is, carbon dioxide in the air can be immobilized in the cured cement body 1 for carbon dioxide immobilization. The carbon dioxide absorbent 20 may be either a solid or a liquid at normal temperature and normal pressure.

In the present specification, "normal temperature" refers to a standard atmospheric temperature, which is, for example, 15°C to 25°C. "Normal pressure" refers to a standard atmospheric pressure, which is, for example, 1 atm (1013 hPa).

Examples of the carbon dioxide absorbent 20 include an alkaline compound.

Here, "alkaline compound" refers to a compound that has a pH of more than 7 when dissolved in water.

The alkaline compound may be an inorganic compound, an organic compound, or a mixture of both.

Examples of the inorganic alkaline compound include calcium hydroxide, magnesium hydroxide, sodium silicate, potassium silicate, lithium silicate, lithium nitrite, and calcium nitrite.

Examples of the organic alkaline compound include arginine, lysine, urea, sodium acetate, potassium acetate, and an amine-based compound.

The carbon dioxide absorbent 20 may be used alone or in combination with two or more types.

Examples of the amine-based compound include an aliphatic amine and an aromatic amine.

As the amine-based compound, an aliphatic amine is preferable because the aliphatic amine is highly soluble in water.

Examples of the aliphatic amine include an alkylamine and an alkanolamine.

Examples of the alkylamine include methylamine, dimethylamine, trimethylamine, ethylamine, diethylamine, triethylamine, propylamine, and butylamine.

Examples of the alkanolamine include monoethanolamine (MEA), diethanolamine (DEA), triethanolamine (TEA), monoisopropanolamine (MIPA), diisopropanolamine (DIPA), triisopropanolamine (TIPA), N-methylethanolamine (2-methylaminoethanol, MAE), and N-methyldiethanolamine (MDEA).

The amine-based compound may be a primary amine, a secondary amine, a tertiary amine, or a quaternary ammonium salt, and may also have a cyclic structure.

In addition to the above, examples of the amine-based compound include dicyclohexylamine (DCHA), dimethylcyclohexylamine (DMCHA), polyetheramine (PEA), diglycolamine (DGA), 2-amino-2-methyl-1-propanol (AMP90), n-methyl-2-pyrrolidone (NMP), N,N-dimethylformamide (DMF), pyrrolidine, piperidine, piperazine, and morpholine.

These amine-based compounds may be used alone or in combination with two or more types.

As the amine-based compound, a secondary amine or a tertiary amine is preferable because the secondary amine or the tertiary amine easily produces carbonate ions in the cured cement body 10.

Examples of the secondary amine include DEA, DIPA, and MAE mentioned above. As the secondary amine, MAE is preferable because MAE has a superior effect in immobilizing carbon dioxide.

Examples of the tertiary amine include TEA, TIPA, and MDEA mentioned above. As the tertiary amine, MDEA is preferable because MDEA has a superior effect in immobilizing carbon dioxide.

The alkaline compound has an effect of suppressing corrosion of steel such as carbon steel. Therefore, in a case where the cured cement body 10 is reinforced concrete, the alkaline compound can suppress the corrosion of reinforcing bars in the reinforced concrete. In general, it is known that when reinforced concrete absorbs carbon dioxide, neutralization progresses, and there is a risk of corrosion of reinforcing bars due to a decrease in pH. The risk can be mitigated by impregnating the cured cement body 10 with the alkaline compound. From the above viewpoint, an alkaline compound is preferable as the carbon dioxide absorbent 20.

An amount of the carbon dioxide absorbent 20 in the cured cement body 1 for carbon dioxide immobilization (the amount of carbon dioxide absorbent 20 supported within the cured cement body 1 for carbon dioxide immobilization) is preferably 5 to 20 parts by mass with respect to 100 parts by mass of the cured cement body 10 serving as a support. When the amount of the carbon dioxide absorbent 20 supported within the cured cement body 1 for carbon dioxide immobilization is equal to or more than the above lower limit, an amount of carbon dioxide that can be immobilized can be further increased. When the amount of the carbon dioxide absorbent 20 supported within the cured cement body 1 for carbon dioxide immobilization is equal to or less than the above upper limit, the amount of the carbon dioxide absorbent 20 adhering to the cured cement body 10 can be maintained.

The amount of the carbon dioxide absorbent 20 supported within the cured cement body 1 for carbon dioxide immobilization is obtained by, for example, pyrolysis gas chromatography-mass spectrometry (pyrolysis GC/MS), a thermogravimetric differential thermal analyzer (TG/DTA), Fourier transform infrared spectroscopy (FT-IR), proton nuclear magnetic resonance (¹H NMR), Raman spectroscopy, or the like.

The amount of the carbon dioxide absorbent 20 supported within the cured cement body 1 for carbon dioxide immobilization can be adjusted based on a type of the cured cement body 10, a type of the carbon dioxide absorbent 20, the amount of the carbon dioxide absorbent 20 in a carbon dioxide absorbing liquid (a concentration of the carbon dioxide absorbent 20 in the carbon dioxide absorbing liquid), an amount of the carbon dioxide absorbing liquid, and combinations thereof.

### <<Method of Manufacturing Cured Cement Body for Carbon Dioxide Immobilization>>

The cured cement body for carbon dioxide immobilization of the present invention is obtained by impregnating a cured cement body with a carbon dioxide absorbing liquid containing a carbon dioxide absorbent to support the carbon dioxide absorbent within the cured cement body. By impregnating the cured cement body with the carbon dioxide absorbing liquid, the carbon dioxide absorbing liquid permeates into the inside (pores) of the cured cement body, allowing the carbon dioxide absorbent in the carbon dioxide absorbing liquid to be supported within the cured cement body.

After impregnating the cured cement body with the carbon dioxide absorbing liquid, a solvent may be dried. In addition, even if moisture such as rain infiltrates into the cured cement body for carbon dioxide immobilization from an outside, it is sufficient that the carbon dioxide absorbent is supported.

### <Carbon Dioxide Absorbing Liquid>

The carbon dioxide absorbing liquid is a liquid that contains the carbon dioxide absorbent capable of absorbing carbon dioxide. The carbon dioxide absorbing liquid has physical properties, such as viscosity, that can permeate into the cured cement body. In the case where the carbon dioxide absorbent is a liquid, the carbon dioxide absorbing liquid may not need to contain the solvent described later.

The amount of the carbon dioxide absorbent in the carbon dioxide absorbing liquid is, for example, preferably 0.01 to 75 mass%, more preferably 1 to 50 mass%, and even more preferably 5 to 25 mass% with respect to the total mass of the carbon dioxide absorbing liquid. When the amount of the carbon dioxide absorbent is equal to or more than the above lower limit, an amount of carbon dioxide that can be immobilized can be further increased. When the amount of the carbon dioxide absorbent is equal to or less than the above upper limit, an amount of the carbon dioxide absorbing liquid impregnated into the cured cement body can be further increased.

In cases where the carbon dioxide absorbing liquid contains a solvent, a viscosity of the carbon dioxide absorbing liquid can be reduced, and the amount of the carbon dioxide absorbing liquid impregnated into the cured cement body can be further increased. As a result, the amount of the carbon dioxide absorbent supported within the cured cement body can be further increased, and the amount of carbon dioxide that can be immobilized can be further increased. Therefore, it is preferable that the carbon dioxide absorbing liquid contains a solvent.

Examples of the solvent include water and an organic solvent such as ethanol.

As the solvent, water is preferable because water is less volatile at normal temperature and easily dissolves the carbon dioxide absorbent.

These solvents may be used alone or in combination with two or more types.

An amount of the solvent is, for example, preferably 25 to 99.99 mass%, more preferably 50 to 99 mass%, and even more preferably 75 to 95 mass% with respect to the total mass of the carbon dioxide absorbing liquid. When the amount of the solvent is equal to or more than the above lower limit, the amount of the carbon dioxide absorbing liquid impregnated into the cured cement body can be further increased. When the amount of the solvent is equal to or less than the upper limit, the amount of the carbon dioxide absorbent can be further increased. Therefore, the amount of carbon dioxide that can be immobilized can be further increased.

A viscosity of the carbon dioxide absorbing liquid at 25°C is, for example, preferably 0.1 to 50 mPa·s, more preferably 0.5 to 25 mPa·s, and even more preferably 0.5 to 10 mPa·s. In a case where the viscosity of the carbon dioxide absorbing liquid at 25°C is equal to or more than the above lower limit, the amount of the carbon dioxide absorbent supported within the cured cement body can be further increased. When the viscosity of the carbon dioxide absorbing liquid at 25°C is equal to or less than the above upper limit, the amount of the carbon dioxide absorbing liquid impregnated into the cured cement body can be further increased.

The viscosity of the carbon dioxide absorbing liquid at 25°C is obtained, for example, by setting a temperature of a measurement target to 25°C, using a No. 2 rotor of a B-type viscometer, and reading a value 30 seconds after the rotor starts rotating at a rotation speed of 60 rpm.

A pH of the carbon dioxide absorbing liquid at 20°C is, for example, preferably equal to or more than 10.0, more preferably equal to or more than 10.2, and even more preferably equal to or more than 10.5. When the pH of the carbon dioxide absorbing liquid at 20°C is equal to or more than the above lower limit, a rate of carbon dioxide absorption can be further increased. An upper limit of the pH of the carbon dioxide absorbing liquid at 20°C is not particularly limited, but is set to, for example, 14.0 for ease of handling.

The pH of the carbon dioxide absorbing liquid at 20°C can be measured by adjusting a measurement target to 20°C and using a pH meter (for example, a multi-digital water quality meter WQ-330J manufactured by HORIBA, Ltd.).

When the carbon dioxide absorbing liquid contains an organosilicon compound, silicon forms a film on the surface and inside (pore surfaces) of the cured cement body such that the carbon dioxide absorbing liquid, which uses water as a solvent, is less likely to be impregnated into the cured cement body. As a result, the amount of the carbon dioxide absorbent supported within the cured cement body is reduced, and the amount of carbon dioxide that can be immobilized is reduced. Therefore, it is preferable that the carbon dioxide absorbing liquid does not contain an organosilicon compound.

Examples of the organosilicon compound include a silane-based compound such as methoxysilane and ethoxysilane.

A method of impregnating the cured cement body with the carbon dioxide absorbing liquid is not particularly limited. Examples of the method include a method of bringing the carbon dioxide absorbing liquid into contact with the surface of the cured cement body.

Examples of the method of bringing the carbon dioxide absorbing liquid into contact with the surface of the cured cement body include a method of applying the carbon dioxide absorbing liquid onto the surface of the cured cement body, a method of spraying the carbon dioxide absorbing liquid onto the surface of the cured cement body, a method of attaching a sheet material containing the carbon dioxide absorbing liquid to the surface of the cured cement body, and a method of immersing the cured cement body in the carbon dioxide absorbing liquid.

From the viewpoint of excellent work efficiency, the method of spraying the carbon dioxide absorbing liquid onto the surface of the cured cement body is preferable as the method of bringing the carbon dioxide absorbing liquid into contact with the surface of the cured cement body.

Examples of a device for spraying the carbon dioxide absorbing liquid onto the surface of the cured cement body include a pressure sprayer and an electric sprayer.

In the case where the carbon dioxide absorbing liquid is applied to the surface of the cured cement body, an application amount of the carbon dioxide absorbing liquid is, for example, preferably 100 to 400 g/m², and more preferably 200 to 400 g/m². In a case where the application amount of the carbon dioxide absorbing liquid is equal to or more than the above lower limit, the amount of carbon dioxide that can be immobilized by the cured cement body for carbon dioxide immobilization can be further increased. When the application amount of the carbon dioxide absorbing liquid is equal to or less than the above upper limit, the amount of the carbon dioxide absorbing liquid used can be reduced, and the work efficiency can be further improved. In addition, there is an advantage in terms of cost. The application amount of the carbon dioxide absorbing liquid may be an amount applied by a single application or a cumulative amount applied by multiple applications.

In a case where the carbon dioxide absorbing liquid is sprayed onto the surface of the cured cement body, the amount of the carbon dioxide absorbing liquid sprayed is, for example, preferably 100 to 400 g/m², and more preferably 200 to 400 g/m². In a case where the amount of the carbon dioxide absorbing liquid sprayed is equal to or more than the above lower limit, the amount of carbon dioxide that can be immobilized by the cured cement body for carbon dioxide immobilization can be further increased. In a case where the amount of the carbon dioxide absorbing liquid sprayed is equal to or less than the above upper limit, the amount of the carbon dioxide absorbing liquid used can be reduced, and the work efficiency can be further improved. In addition, there is an advantage in terms of cost. The amount of the carbon dioxide absorbing liquid sprayed may be an amount sprayed by single spraying or a cumulative amount sprayed by multiple sprayings.

In the case where a sheet material containing the carbon dioxide absorbing liquid is attached to the surface of the cured cement body, examples of the sheet material include a material with alkali resistance, such as polypropylene and polyvinyl alcohol.

A water retention capacity of the sheet material (the amount of the carbon dioxide absorbing liquid in the sheet material) is preferably 50 mass% or more, and more preferably 100 mass% or more with respect to a dry mass of the sheet material. When the water retention capacity of the sheet material is equal to or more than the above lower limit, the amount of the carbon dioxide absorbing liquid impregnated into the cured cement body can be further increased. An upper limit of the water retention capacity of the sheet material is not particularly limited, but is preferably 500 mass%, for example.

A time for attaching the sheet material is not particularly limited, but is preferably 24 hours or longer, for example. When the time for attaching the sheet material is equal to or longer than the above lower limit, the amount of the carbon dioxide absorbing liquid impregnated into the cured cement body can be further increased.

In the case where the cured cement body is immersed in the carbon dioxide absorbing liquid, a time (immersion period) for immersing the cured cement body in the carbon dioxide absorbing liquid is, for example, preferably 6 hours or longer and 50 days or shorter, and more preferably 12 hours or longer and 30 days or shorter. When the time for immersing the cured cement body in the carbon dioxide absorbing liquid is equal to or longer than the above lower limit, a sufficient amount of the carbon dioxide absorbing liquid can be impregnated into the cured cement body. When the time for immersing the cured cement body in the carbon dioxide absorbing liquid is equal to or shorter than the above upper limit, productivity of the cured cement body for carbon dioxide immobilization can be further enhanced.

The amount of the carbon dioxide absorbent supported within the cured cement body (the amount of the carbon dioxide absorbent) is preferably 5 to 20 parts by mass with respect to 100 parts by mass of the cured cement body. When the amount of the carbon dioxide absorbent is equal to or more than the above lower limit, the amount of carbon dioxide that can be immobilized can be further increased. When the amount of the carbon dioxide absorbent is equal to or less than the upper limit, the amount of the carbon dioxide absorbent adhering to the cured cement body can be maintained.

### <<Carbon Dioxide Immobilization Method>>

The carbon dioxide immobilization method of the present invention includes: a step (step I) of impregnating a cured cement body with a carbon dioxide absorbing liquid containing a carbon dioxide absorbent to obtain a cured cement body for carbon dioxide immobilization; and a step (step II) of bringing the obtained cured cement body for carbon dioxide immobilization into contact with air to immobilize carbon dioxide contained in the air in the cured cement body for carbon dioxide immobilization.

That is, a carbon dioxide immobilization method 100 according to the embodiment of the present invention includes step I (S 1) and step II (S2) as shown in FIG. 2.

In step I, the cured cement body is impregnated with the carbon dioxide absorbing liquid containing the carbon dioxide absorbent, thereby obtaining the cured cement body for carbon dioxide immobilization that supports the carbon dioxide absorbent.

A method of impregnating the cured cement body with the carbon dioxide absorbing liquid is the same as the method described in the method of manufacturing a cured cement body for carbon dioxide immobilization.

In step 11, the cured cement body for carbon dioxide immobilization is brought into contact with the air, whereby the carbon dioxide contained in the air is absorbed by the carbon dioxide absorbent contained in the cured cement body for carbon dioxide immobilization. A portion or all of carbon dioxide absorbed by the carbon dioxide absorbent reacts as carbonate ions with calcium ions in the cured cement body to form calcium carbonate. In this way, a portion or all of carbon dioxide in the air is immobilized as calcium carbonate in the cured cement body by the action of the carbon dioxide absorbent. Therefore, carbon dioxide can be immobilized in the cured cement body for carbon dioxide immobilization.

A method of bringing the cured cement body for carbon dioxide immobilization into contact with the air is not particularly limited. For example, the cured cement body for carbon dioxide immobilization may be exposed to the air.

A temperature at which the cured cement body for carbon dioxide immobilization is brought into contact with the air is not particularly limited, and is, for example, preferably between 0°C and 50°C, and more preferably between 5°C and 40°C. When the temperature at which the cured cement body for carbon dioxide immobilization is brought into contact with the air is equal to or higher than the above lower limit, the amount of carbon dioxide that can be immobilized can be further increased. When the temperature at which the cured cement body for carbon dioxide immobilization is brought into contact with the air is equal to or lower than the upper limit, alteration of the cured cement body for carbon dioxide immobilization can be suppressed.

A time for bringing the cured cement body for carbon dioxide immobilization into contact with the air is not particularly limited, and is, for example, preferably 1 hour or longer, and more preferably 24 hours or longer. When the time for bringing the cured cement body for carbon dioxide immobilization into contact with the air is equal to or longer than the above lower limit, the amount of carbon dioxide that can be immobilized can be further increased. An upper limit of the time for bringing the cured cement body for carbon dioxide immobilization into contact with the air is not particularly limited, but is, for example, preferably 3 months because the carbon dioxide absorbing liquid in the cured cement body for carbon dioxide immobilization is easily held.

The amount of carbon dioxide immobilized in the cured cement body for carbon dioxide immobilization can be measured by, for example, pyrolysis gas chromatography-mass spectrometry (pyrolysis GC/MS), a thermogravimetric differential thermal analyzer (TG/DTA), or the like.

The cured cement body for carbon dioxide immobilization supports the carbon dioxide absorbent and thus can absorb (immobilize) carbon dioxide from the air. As a result, the concentration of carbon dioxide in the air can be reduced.

The carbon dioxide immobilization method of the present invention can be applied to a cured cement body after being cured, rather than to a cement-containing composition during manufacturing. Therefore, the carbon dioxide immobilization method of the present invention can be applied to existing cured cement bodies and can contribute to a reduction in the concentration of carbon dioxide in the air.

In the carbon dioxide immobilization method of the present invention, carbon dioxide can be immobilized by a simple method of impregnation, so that a large-scale facility or construction work is not required.

Since carbon dioxide can be immobilized by a simple method, the carbon dioxide immobilization method of the present invention can be repeatedly applied to existing cured cement bodies.

Although the carbon dioxide immobilization method and the cured cement body for carbon dioxide immobilization of the present invention have been described above, the present invention is not limited to the above-described embodiments and can be modified as appropriate within a range that does not depart from the gist of the present invention.

For example, the cured cement body for carbon dioxide immobilization may be dried to dry the carbon dioxide absorbing liquid. However, since an absorption efficiency of carbon dioxide can be further increased, it is preferable in the carbon dioxide immobilization method that the carbon dioxide absorbing liquid is not dried.

For example, in a case where an effect of absorbing carbon dioxide decreases, the effect of absorbing carbon dioxide can be restored by re-impregnating the cured cement body with the carbon dioxide absorbing liquid. The effect of absorbing carbon dioxide can be determined by measuring the concentration of carbon dioxide in the air surrounding the cured cement body for carbon dioxide immobilization, or the like. Alternatively, the effect of absorbing carbon dioxide can be determined by placing a sample of the cured cement body for carbon dioxide immobilization into a container, such as a sample bag filled with carbon dioxide, and measuring a decrease in volume of the container due to absorption of carbon dioxide by the sample.

### Examples

Hereinafter, the present invention will be described in more detail with reference to examples, but the present invention is not limited to these examples.

### [Experimental Example 1]

As a cured cement body, a powder obtained by curing a cement paste and crushing the cured product with a ball mill was used. A composition of the cement paste was set to a water-cement ratio (W/C) of 60%.

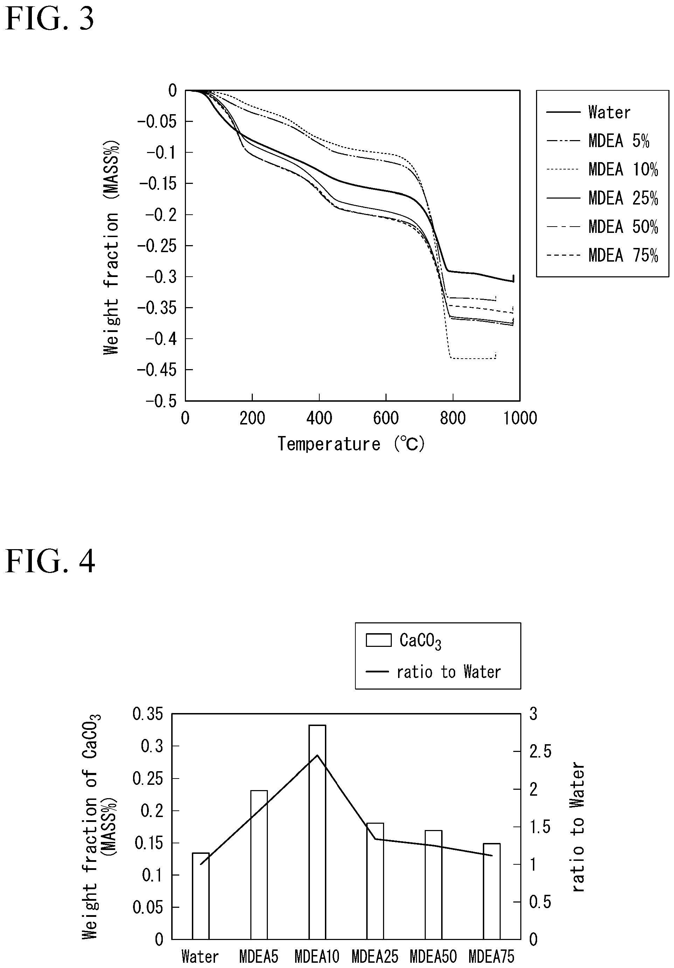

Carbon dioxide absorbing liquids were prepared using N-methyldiethanolamine (MDEA) as a carbon dioxide absorbent and water as a solvent, and setting a MDEA concentration to 0 mass% (water), 5 mass%, 10 mass%, 25 mass%, 50 mass%, and 75 mass%. 250 mL of the carbon dioxide absorbing liquid of each concentration was measured and placed into a 400 mL resin container. Then, 10 g of the above powder was added and mixed well to impregnate the power with the carbon dioxide absorbing liquid, thereby obtaining a cured cement body for carbon dioxide immobilization. Each resin container was supplied with an atmosphere from a chamber at a temperature of 20°C, a humidity of 60% RH, and a CO₂ concentration of 5 mass% at a flow rate of 8 L/min for 12 hours, allowing the cured cement body for carbon dioxide immobilization to absorb CO₂. Thereafter, 10 mg of the cured cement body for carbon dioxide immobilization of each example was taken out, and a mass of immobilized CO₂ was measured using a pyrolysis gas chromatography-mass spectrometry (pyrolysis GC/MS) apparatus. The results are shown in FIGS. 3 and 4.

A vertical axis in a graph of FIG. 3 represents a mass loss (mass%) of the cured cement body for carbon dioxide immobilization. The mass loss of the cured cement body for carbon dioxide immobilization is due to release of carbon dioxide immobilized in the cured cement body for carbon dioxide immobilization.

As shown in FIG. 3, it was confirmed that the mass loss of the cured cement body for carbon dioxide immobilization was larger when the MDEA concentration in the carbon dioxide absorbing liquid was 5 mass% or more, compared to a case where the carbon dioxide absorbent was not contained (water).

As shown in FIG. 4, the mass loss (mass%) of the cured cement body for carbon dioxide immobilization, that is, a mass of carbon dioxide immobilized in the cured cement body for carbon dioxide immobilization, was the largest at a MDEA concentration of 10 mass%, which was equal to or more than twice that of the powder (cured cement body) impregnated with water. In addition, it was found that in a case of the carbon dioxide absorbing liquid with a MDEA concentration of 25 mass% or more, the powder was not sufficiently impregnated with the carbon dioxide absorbing liquid. It is considered that this is because the carbon dioxide absorbing liquid with a MDEA concentration of 25 mass% or more has a high viscosity and is thus difficult to impregnate into the cured cement body.

### [Experimental Example 2]

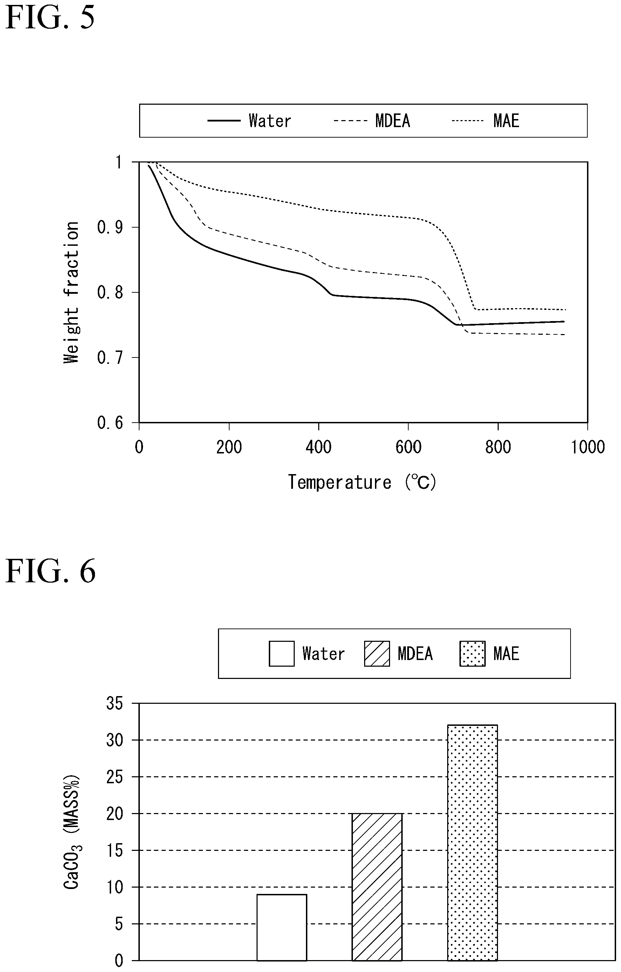

A cement paste with a water-cement ratio (W/C) of 50% was sealed and cured for 28 days in an environment at 20°C, and was crushed into granules, thereby preparing a sample of the cured cement body. In an environment at 20°C, 30 g of the sample was weighed and immersed in each of 300 mL of water, 300 mL of an MDEA aqueous solution with a concentration of 10 mass%, or 300 mL of a N-methylethanolamine (MAE) aqueous solution with a concentration of 10 mass%. The water or aqueous solution (carbon dioxide absorbing liquid) was bubbled with COz gas to be carbonated. A CO₂ gas concentration was 5 volume%, a flow rate was 2 L/min, and a bubbling time was 6 hours. After the bubbling was completed, each sample was filtered and dried in an environment at 40°C for 24 hours. The dried sample was crushed into a powder, 10 mg of the powder was taken out, and thermogravimetric differential thermal analysis (TG/DTA) was performed on each to measure an amount of produced calcium carbonate. The results are shown in FIGS. 5 and 6.

Note that the amount of produced calcium carbonate is given by a mass difference (mass loss) between a mass at 500°C and a mass at 800°C in TG/DTA.

A vertical axis in a graph of FIG. 5 represents a ratio of a mass of the sample after heating during TG/DTA to a mass of the sample before TG/DTA. The mass of the sample decreases as the calcium carbonate produced decomposes. A larger mass loss in calcium carbonate means a larger amount of carbon dioxide immobilized in the sample (cured cement body for carbon dioxide immobilization).

As shown in FIG. 5, the mass loss of the sample from 500°C to 800°C was larger in the order of the MAE aqueous solution, the MDEA aqueous solution, and water, and it was confirmed that the impregnation with the carbon dioxide absorbing liquid resulted in a larger mass loss of the cured cement body for carbon dioxide immobilization than that without the carbon dioxide absorbent contained (water).

A vertical axis in a graph of FIG. 6 represents a mass loss (mass%) of the sample from 500°C to 800°C with respect to a total mass of the sample before TG/DTA.

As shown in FIG. 6, the mass loss of the sample from 500°C to 800°C was larger in the order of the MAE aqueous solution, the MDEA aqueous solution, and water, and it was confirmed that the impregnation with the carbon dioxide absorbing liquid resulted in a larger mass loss of the cured cement body for carbon dioxide immobilization than that without the carbon dioxide absorbent contained (water).

### [Experimental Example 3]

To confirm a relationship between the concentration of the carbon dioxide absorbent and a pH of the carbon dioxide absorbing liquid, carbon dioxide absorbing liquids with the concentration shown in Table 1 were prepared using MDEA or MAE was used as the carbon dioxide absorbent and water as the solvent, and a pH of each carbon dioxide absorbing liquid at 20°C was measured. For the measurement of the pH, a pH meter (multi-digital water quality meter, WQ-330J) manufactured by HORIBA, Ltd. was used. The results are shown in Table 1 and FIG. 5.

**[Table 1]**

| Concentration of carbon dioxide absorbent (mass%) | Type of carbon dioxide absorbent | |
|---|---|---|
| | MDEA | MAE |
| | pH | |
| 1 | 10.89 | 11.45 |
| 5 | 11.18 | 11.63 |
| 10 | 11.34 | 12.10 |
| 25 | 11.52 | 12.45 |
| 33 | 11.57 | - |
| 50 | 11.79 | 12.75 |
| 100 | 12.80 | 13.45 |

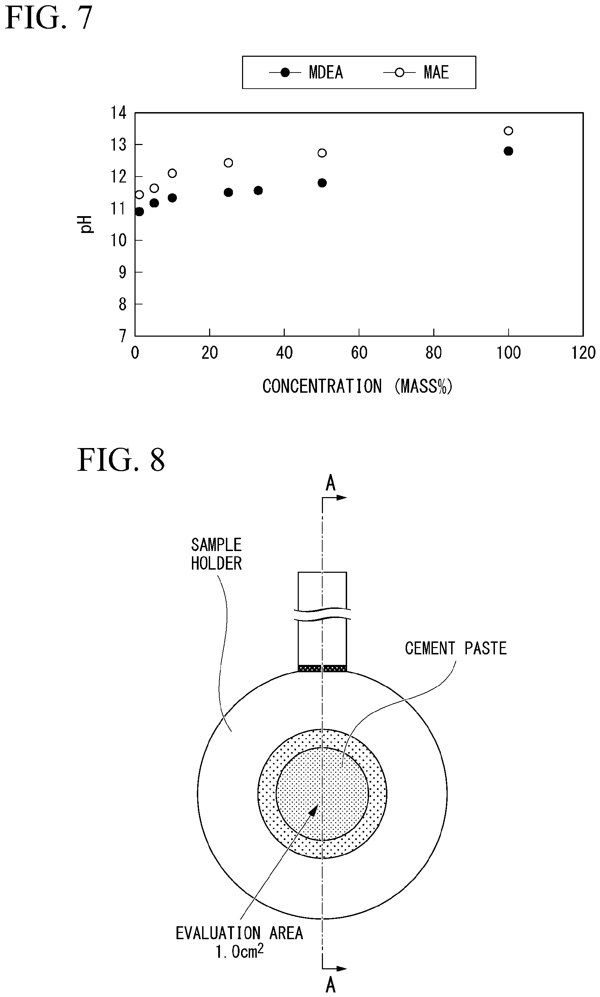

As shown in Table 1 and FIG. 7, the pH of the carbon dioxide absorbing liquid was 10.0 or higher when the concentration of the carbon dioxide absorbent was in a range of 1 mass% or more.

The pH of the carbon dioxide absorbing liquid increased as the concentration of the carbon dioxide absorbent increased, and the pH of the carbon dioxide absorbing liquid with an MAE concentration of 100 mass% was 13.45.

### [Experimental Example 4]

As the cured cement body, mortar made by kneading and mixing cement, fine aggregate, and water was cured and then formed into a cylindrical shape with a diameter of 50 mm and a height of 10 mm. A composition of the mortar was such that a water-cement ratio (W/C) was 50%, and a mass ratio of cement to fine aggregate was 1:2.5.

Carbon dioxide absorbing liquids were prepared using MDEA as the carbon dioxide absorbent and water as the solvent, and setting a MDEA concentration to 0 mass% (water), 5 mass%, 10 mass%, 25 mass%, 50 mass%, 75 mass%, and 100 mass%. The cylindrical cured cement body was immersed in the carbon dioxide absorbing liquid at a temperature of 20°C for 24 hours to impregnate the cured cement body with the carbon dioxide absorbing liquid, thereby obtaining a cured cement body for carbon dioxide immobilization. After being taken out and dried, a surface hardness of the obtained cured cement body for carbon dioxide immobilization was evaluated using a scratch tester (manufactured by LINAX Co., Ltd.) certified by the Japan Society for Finishing Technology. The results are shown in Table 2. In Table 2, "bold 1" and "bold 2" represent widths (mm) of two randomly selected scratches from thicker scratches. "bold ave" represents an average value of "bold 1" and "bold 2". "narrow 1" and "narrow 2" represent widths (mm) of two randomly selected scratches from narrower scratches. "narrow ave" represents an average value of "narrow 1" and "narrow 2".

**[Table 2]**

| Concentration of MDEA (mass%) | bold 1 (mm) | bold 2 (mm) | bold ave (mm) | narrow 1 (mm) | narrow 2 (mm) | narrow ave (mm) |
|---|---|---|---|---|---|---|
| 0 | 0.618 | 0.651 | 0.635 | 0.467 | 0.447 | 0.457 |
| 5 | 0.500 | 0.657 | 0.594 | 0.387 | 0.427 | 0.407 |
| 10 | 0.538 | 0.546 | 0.542 | 0.397 | 0.391 | 0.394 |
| 25 | 0.448 | 0.515 | 0.482 | 0.293 | 0.354 | 0.324 |
| 50 | 0.336 | 0.343 | 0.340 | 0.229 | 0.283 | 0.256 |
| 75 | 0.355 | 0.381 | 0.368 | 0.255 | 0.255 | 0.255 |
| 100 | 0.350 | 0.417 | 0.384 | 0.235 | 0.257 | 0.246 |
| No immersion | 0.314 | 0.415 | 0.365 | 0.207 | 0.281 | 0.244 |

As shown in Table 2, it was confirmed that as the concentration of MDEA increased, the width of the scratch tended to decrease. There is a correlation between the width of the scratch and compressive strength, with a larger scratch width tending to indicate a lower compressive strength. That is, from the results shown in Table 2, it was found that the compressive strength was not adversely affected by the impregnation with MDEA, regardless of the concentration of MDEA.

### [Experimental Example 5]

A model test was conducted to confirm that the carbon dioxide absorbent of the present embodiment has corrosion resistance to reinforcing bars in reinforced concrete.

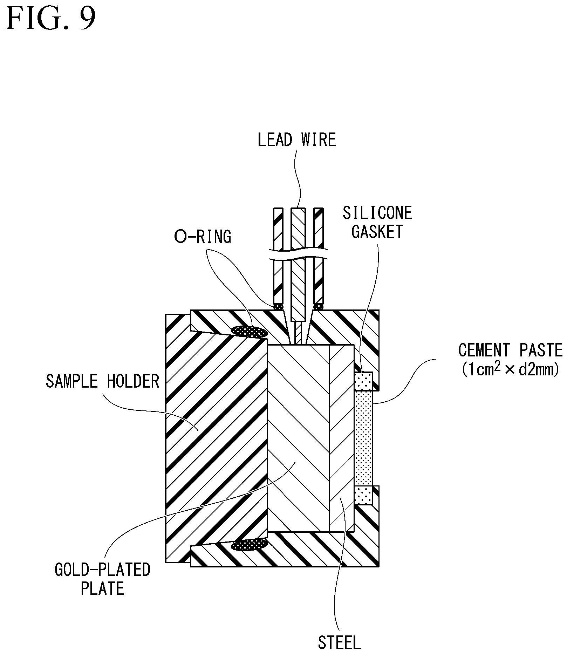

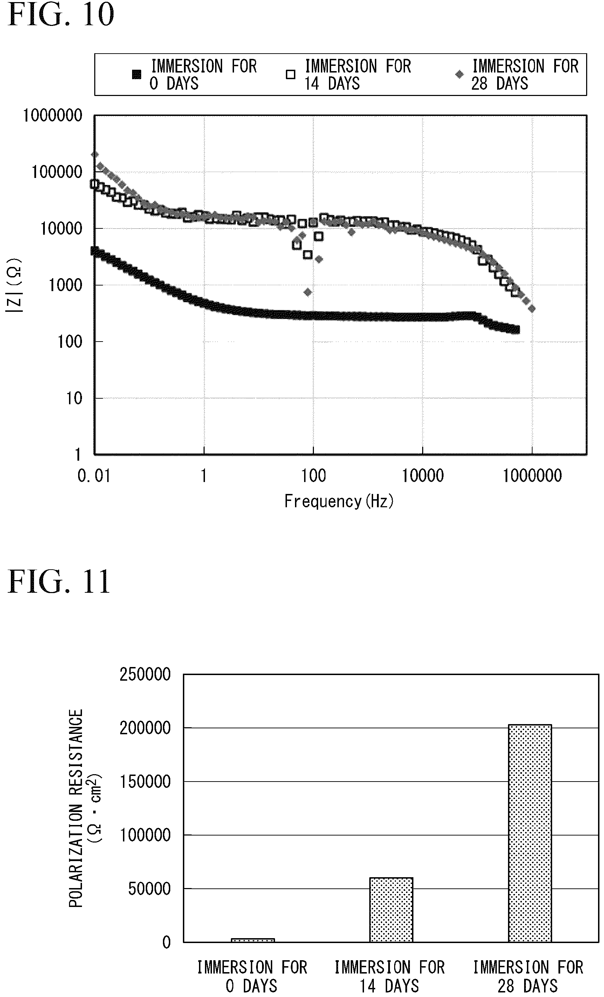

SS400 steel with an outer diameter of 25 mm and a thickness of 2.5 mm was set in a sample holder of a measurement jig shown in FIGS. 8 and 9, and a cement paste with a water-cement ratio (W/C) of 50% was poured onto an exposed surface (1 cm²) of the steel, sealed, and cured for 3 days. A cured cement body after the curing was placed along with the sample holder in an environment with a CO₂ concentration of 5 volume%, a temperature of 20°C, and a humidity of 60% RH for 35 days to undergo carbonation. Thereafter, a polarization resistance of the steel was acquired using an electrochemical impedance method in a 0.1 mol/L calcium nitrate aqueous solution. Furthermore, the cured cement body, along with the sample holder, was then immersed in an MDEA aqueous solution with a concentration of 5 mass%, and an impedance and the polarization resistance of the steel were measured using the electrochemical impedance method in the MDEA aqueous solution after 14 days and 28 days. The results are shown in FIGS. 10 and 11.

FIG. 10 is a graph showing an impedance spectrum of the steel. As shown in FIG. 10, impedance values of the steel in the cured cement body immersed in the carbon dioxide absorbing liquid for 14 days were larger than those of the steel in the cured cement body for 0 days (before immersion). A large impedance value means that a corrosion current density flowing through a surface of the steel is small, which means that a corrosion rate of the steel is low, meaning that corrosion resistance of the steel is high. That is, a large impedance value means that anticorrosion performance of the cured cement body is improved.

FIG. 11 is a graph showing the polarization resistance of the steel in each of three cases with different immersion periods. The polarization resistance can be calculated from the impedance value. As shown in FIG. 11, in a case of an immersion period of 28 days, the polarization resistance significantly exceeded 130,000 Ω·cm² (130 kΩ·cm²), which is a reference value of the corrosion rate considered as a corrosion stop, and reached 200,000 Ω·cm² (200 kΩ·cm²). As described above, the polarization resistance increases as the immersion period increases, which means that an anticorrosion effect is enhanced by the impregnation with the carbon dioxide absorbing liquid.

From the above, it was found that, according to the carbon dioxide immobilization method of the present invention, carbon dioxide can be immobilized in the cured cement body for carbon dioxide immobilization.

Furthermore, in was found that, according to the carbon dioxide absorbing liquid related to the carbon dioxide immobilization method of the present invention, the anticorrosion effect of the cured cement body for carbon dioxide immobilization can be further increased.

There are 17 international goals known as the "Sustainable Development Goals (SDGs)" that were adopted at the United Nations Summit in September 2015. The carbon dioxide immobilization method according to the embodiment can contribute to the achievement of, for example, the goals of "11. Sustainable cities and communities," "12. Responsible consumption and production," and "13. Climate action" among the 17 goals of the SDGs.

### Reference Signs List

1: Cured cement body for carbon dioxide immobilization
10: Cured cement body
20: Carbon dioxide absorbent
100: Carbon dioxide immobilization method
S1: Step I
S2: Step II

## Claims

1. A carbon dioxide immobilization method comprising:
impregnating a cured cement body with a carbon dioxide absorbing liquid containing a carbon dioxide absorbent to obtain a cured cement body for carbon dioxide immobilization, in which the carbon dioxide absorbent is supported within the cured cement body; and
bringing the cured cement body for carbon dioxide immobilization into contact with air to immobilize carbon dioxide contained in the air in the cured cement body for carbon dioxide immobilization.

2. The carbon dioxide immobilization method according to Claim 1,
wherein the carbon dioxide contained in the air is immobilized in the cured cement body for carbon dioxide immobilization as calcium carbonate.

3. The carbon dioxide immobilization method according to Claim 1 or 2,
wherein the carbon dioxide absorbent is an alkaline compound.

4. The carbon dioxide immobilization method according to any one of Claims 1 to 3,
wherein a pH of the carbon dioxide absorbing liquid at 20°C is 10.0 or higher.

5. The carbon dioxide immobilization method according to any one of Claims 1 to 4,
wherein the carbon dioxide absorbing liquid does not contain an organosilicon compound.

6. The carbon dioxide immobilization method according to any one of Claims 1 to 5,
wherein the cured cement body is concrete.

7. A cured cement body for carbon dioxide immobilization, in which a carbon dioxide absorbent is supported within a cured cement body.

8. The cured cement body for carbon dioxide immobilization according to Claim 7, wherein the carbon dioxide absorbent is an alkaline compound.

9. The cured cement body for carbon dioxide immobilization according to Claim 7 or 8,
wherein an amount of the carbon dioxide absorbent is 5 to 20 parts by mass with respect to 100 parts by mass of the cured cement body.

10. The cured cement body for carbon dioxide immobilization according to any one of Claims 7 to 9,
wherein the cured cement body does not contain an organic silicon compound.

11. The cured cement body for carbon dioxide immobilization according to any one of Claims 7 to 10,
wherein the cured cement body is concrete.
